# FASCICULE DE BREVET EUROPEEN

(11) **EP 1 265 763 B1**
(45) Date de publication et mention de la délivrance du brevet: **17.12.2003**
(21) Numéro de dépôt: 01913970.8
(22) Date de dépôt: 09.03.2001
(51) Int. Cl.: B60G 21/05, B60G 11/60

(54) **TRAVERSE D'ESSIEU DE VEHICULE AVEC ARTICULATIONS ANTIROULIS ET ESSIEU DE VEHICULE COMPORTANT UNE TELLE TRAVERSE**
QUERTRÄGER FÜR FAHRZEUGACHSE MIT ANTIROLLGELENKEN UND FAHRZEUGACHSE MIT EINEM SOLCHEN QUERTRÄGER
VEHICLE AXLE CROSSPIECE WITH ANTI-ROLL ARTICULATIONS AND VEHICLE AXLE COMPRISING SAME

(30) Priorité: 22.03.2000 FR 0003633
(43) Date de publication de la demande: 18.12.2002
(73) Titulaire: VALLOUREC COMPOSANTS AUTOMOBILES VITRY, 51300 Vitry le Francois (FR); Compagnie Générale des Etablissement Michelin-Michelin & Cie, 63000 Clermont-Ferrand (FR)
(72) Inventeur: BIARD, Vincent, F-63000 Clermont-Ferrand (FR); BLONDELET, Michel, F-63450 Le Crest (FR)
(74) Mandataire: Abello, Michel
(86) Numéro de dépôt international: FR0100706
(87) Numéro de publication internationale: WO01070527

(56) Documents cités:
- EP-A- 0 114 790
- WO-A-97/47486
- DE-A- 1 630 901
- DE-A- 2 361 009
- US-A- 2 270 572
- US-A- 3 601 426
- PATENT ABSTRACTS OF JAPAN vol. 016, no. 036 (M-1205), 29 janvier 1992 (1992-01-29) & JP 03 244841 A (TOYO TIRE & RUBBER CO LTD), 31 octobre 1991 (1991-10-31)

## Description

L'invention est relative à une traverse d'essieu de véhicule selon le préambule de la revendication 1. Un tel essieu est décrit dans WO 97 47 486 A.

Une telle traverse d'essieu peut être montée ou bien suivant l'axe d'articulation des bras sur la caisse du véhicule, ou bien parallèlement à cet axe, décalée vers les roues. Cette traverse améliore le comportement antiroulis du train de roues concerné.

Chaque articulation antiroulis peut avoir une raideur qui diffère selon la direction radiale ; par exemple la raideur peut être différente dans une direction verticale, horizontale ou à 45°. On peut prévoir, pour cela, une articulation antiroulis asymétrique ou munie d'alvéoles selon une répartition déterminée dans les différentes directions. Il est ainsi possible de mieux compenser des efforts en déformation qui diffèrent suivant les directions radiales. Bien entendu, il est également possible d'utiliser des articulations antiroulis dont la raideur radiale reste constante quelle que soit la direction radiale.

Une telle traverse pose un problème quant au comportement du véhicule, notamment dans un virage, par suite des déformations en flexion de cette traverse. Les deux tubes de la traverse, de diamètres différents, présentent en effet des inerties différentes. Avec une traverse conforme à l'état de la technique, les déformations en flexion de la traverse dépendent de manière sensible du sens du virage de sorte que le comportement du véhicule change selon que le virage est à gauche ou à droite.

L'invention a pour but, surtout, de fournir une traverse d'essieu du genre défini précédemment qui présente sensiblement les mêmes déformations en flexion, au moins pour une direction radiale considérée, quel que soit le sens du virage. Autrement dit, l'invention vise à fournir une traverse d'essieu qui présente une symétrie de flexion. Il est souhaitable en outre que la traverse reste d'une construction simple et d'un prix de revient acceptable.

Selon l'invention, une traverse d'essieu de véhicule, du genre défini précédemment, est caractérisée par le fait que les articulations antiroulis, affectées chacune d'un coefficient proportionnel à leur raideur radiale, admettent un barycentre qui est plus proche du bras de roue relié au tube extérieur de la traverse que de l'autre bras de roue.

La contribution des articulations antiroulis à la flexion de la traverse peut être assimilée à un "pivot élastique", situé à leur barycentre, ayant une raideur de flexion qui dépend des raideurs radiales des articulations et de leur écartement. La solution de l'invention permet, en décalant ce barycentre du côté du bras de roue relié au tube extérieur le plus rigide de rendre la contribution du pivot plus sensible du côté de ce bras de roue, ce qui compense la différence de rigidité des tubes et contribue à la symétrie des déformations en flexion de la traverse.

Avantageusement, ce décalage du barycentre est obtenu en partie par l'utilisation d'articulations présentant des raideurs radiales différentes, l'articulation la plus proche du bras de roue relié au tube extérieur présentant la raideur radiale la plus forte.

De préférence, la raideur radiale de l'articulation antiroulis la plus proche du bras de roue relié au tube extérieur est supérieure d'au moins 20 % et, de préférence encore, d'au moins 35 % à la raideur radiale de l'autre articulation.

Avantageusement, le centre géométrique des articulations antiroulis est décalé du côté du bras relié au tube extérieur, c'est-à-dire est plus proche de ce bras que de l'autre bras. En particulier, avec L désignant la longueur de la traverse, la distance du centre géométrique des articulations antiroulis au bras relié au tube extérieur est inférieure à 0.45 L.

Selon un autre aspect de l'invention, qui peut être considéré seul ou en combinaison avec le précédent, on cherche à optimiser la rigidité globale de la traverse. En particulier, on cherche à fournir une traverse d'essieu avec articulations élastiques antiroulis qui présente une bonne rigidité de flexion, sans pour autant modifier sensiblement le comportement en torsion. Il est souhaitable en outre que les moyens permettant d'obtenir ce résultat restent simples et économiques.

Selon cet autre aspect, la distance entre les articulations antiroulis de la traverse d'essieu est choisie de manière à optimiser la rigidité de flexion de la traverse en fonction des rigidités des tubes et des raideurs des articulations.

Avantageusement, la distance entre les articulations est comprise entre pL et qL, L étant la longueur de la traverse et p et q étant des coefficients respectivement égaux à 0.3 et 0.6.

L'invention concerne également un essieu de véhicule muni d'une telle traverse d'essieu.

L'invention consiste, mises à part les dispositions exposées ci-dessus, en un certain nombre d'autres dispositions dont il sera plus explicitement question ci-après à propos d'un exemple de réalisation décrit avec référence au dessin ci-annexé, mais qui n'est nullement limitatif.

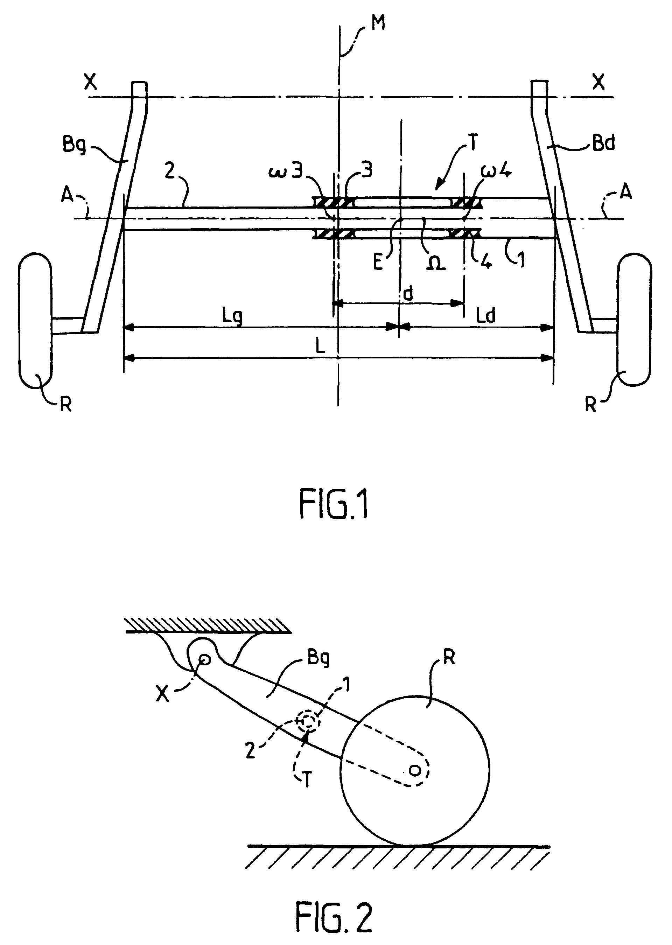

La figure 1, de ce dessin, est une vue schématique en plan, avec parties coupées, d'une traverse d'essieu selon l'invention.

La figure 2 est une vue schématique de côté d'un bras de suspension avec la traverse.

En se reportant au dessin, on peut voir une traverse T d'essieu arrière de véhicule. Cette traverse T comprend un premier tube 1 dont une extrémité est fixée à un bras de roue Bd, qui peut être un bras tiré ou un bras poussé. L'axe d'articulation X-X du bras Bd est situé en avant de l'axe de la roue R dans le cas d'un bras tiré. La fixation du tube 1 sur le bras Bd peut être réalisée par soudure. L'autre extrémité du tube 1 est dirigée vers l'autre bras de roue Bg, situé de l'autre côté du véhicule.

La traverse T comporte un deuxième tube 2, de plus faible diamètre, engagé en partie à l'intérieur du tube 1. L'extrémité extérieure du tube 2 est fixée à l'autre bras Bg de roue. Les deux tubes 1, 2 en position de repos admettent un même axe A-A parallèle à l'axe de rotation X-X des bras Bd, Bg et décalé vers la roue R, c'est-à-dire vers l'arrière par rapport à X-X. En variante, l'axe A-A peut être confondu avec l'axe X-X.

Le tube intérieur 2 et le tube extérieur 1 sont reliés entre eux par deux articulations 3, 4 en matière élastomère espacés d'une distance d suivant la direction axiale A-A des tubes. Les articulations 3, 4 sont formées par des bagues ou couronnes de matière élastomère, ou par des blocs séparés de matière élastomère disposés en couronne autour du tube 2. Chaque articulation 3, 4 a une raideur radiale propre. Cette raideur radiale peut être différente selon les différentes directions radiales pour tenir compte des amplitudes des efforts en déformation selon ces directions. Par exemple, la raideur radiale peut être différente dans la direction verticale, horizontale ou à 45°, ce qui peut être obtenu avec une articulation élastique asymétrique, ou avec des alvéoles réparties en conséquence suivant les différentes directions radiales.

Chaque articulation 3, 4 admet un plan moyen orthogonal à l'axe A-A, qui coupe cet axe en un point ω3, ω4 correspondant au centre de l'articulation. Les surfaces intérieures et extérieures des articulations 3, 4 sont rendues solidaires respectivement de la surface externe du tube 2 et de la surface interne du tube 1 par adhérisation ou procédé équivalent.

On désigne par k3 et k4 la raideur radiale des articulations 3, 4 suivant une direction radiale déterminée pour laquelle une symétrie de rigidité de flexion de la traverse T est souhaitée. Selon le cas, la raideur radiale peut être constante quelle que soit la direction radiale.

Pour assurer cette symétrie de rigidité de flexion, l'ensemble est tel que les articulations 3, 4 affectées d'un coefficient proportionnel à leur raideur radiale respective k3, k4, admettent un barycentre Ω qui est plus proche du bras Bd relié au tube extérieur 1 que de l'autre bras Bg. Autrement dit, le barycentre Ω situé sur l'axe A-A est décalé vers le bras Bd par rapport au plan médian longitudinal vertical M du véhicule. Le barycentre Ω est celui des points ω3, ω4 affectés de coefficients proportionnels à k3, k4.

La contribution des articulations 3, 4 à la flexion de la traverse T peut être assimilée à un "pivot élastique" situé au barycentre Ω et ayant une raideur fonction des raideurs des articulations 3 et 4 et de leur écartement.

En déplaçant le barycentre Ω vers le bras Bd relié au tube 1 extérieur qui est le plus rigide, on assure une contribution des articulations 3, 4 (et du pivot équivalent) plus sensible du côté du bras Bd, ce qui compense la différence de rigidité des tubes 1, 2.

De préférence, la raideur radiale k4 de l'articulation 4 (la plus proche du bras Bd relié au tube extérieur 1) est supérieure à celle k3 de l'articulation 3.

En particulier, la raideur radiale k4 de l'articulation 4 est supérieure d'au moins 20 % et de préférence d'au moins 35 % à la raideur radiale k3 de l'articulation 3.

Avantageusement, l'ensemble est tel que le centre géométrique E (point équidistant des points ω3 et ω4) des articulations 3 et 4 est également décalé, par rapport au plan médian vertical longitudinal M, vers le bras Bd relié au tube extérieur 1. En désignant par L, la longueur de la traverse T, la distance Ld du centre géométrique E des articulations au bras Bd est inférieure à 0.45 L, tandis que la distance Lg du point E au bras Bg, relié au tube intérieur 2, est au moins égale à 0.55 L.

Sans contraintes de coûts, on peut réaliser de nombreuses combinaisons de géométrie en jouant sur les raideurs des articulations et des tubes.

Selon un autre aspect de l'invention, on cherche à optimiser la rigidité globale de la traverse. Des effets contraires s'affrontent à ce propos : si on écarte les deux articulations élastiques 3, 4, celles-ci jouent moins en flexion, ce qui augmente la rigidité de la traverse ; toutefois, en procédant de la sorte on augmente la longueur entre appuis du tube intérieur 2 moins rigide ce qui va dans le sens inverse et contribue à diminuer la rigidité de l'ensemble de la traverse T. Par ailleurs, si on augmente la rigidité radiale des articulations antiroulis 3, 4, par exemple en agissant sur la composition de la matière de ces articulations, on provoque non seulement une modification du comportement à l'égard des efforts radiaux, mais aussi une modification du comportement en torsion. L'amélioration du comportement en flexion de la traverse peut alors conduire à une modification non souhaitée des caractéristiques antiroulis.

On cherche donc à fournir une traverse d'essieu avec articulations élastiques antiroulis qui présente une bonne rigidité de flexion, sans pour autant modifier sensiblement le comportement en torsion.

Pour cela, la distance d entre les deux articulations antiroulis 3, 4, et la position globale de ces articulations sur la traverse sont choisies de manière à optimiser la rigidité de flexion de la traverse T.

La détermination de la distance d et de la position globale des articulations sur la traverse peut se faire expérimentalement et/ou par le calcul. La position globale des articulations 3, 4 sur la traverse est définie (par exemple) par la distance Lg entre le centre géométrique E des articulations et le bras gauche de suspension Bg.

De préférence, la distance d entre les articulations est comprise entre pL et qL, L étant la longueur de la traverse et p et q étant des coefficients respectivement égaux à 0.3 et 0.6.

Un exemple avantageux correspond à L = 1100 mm ; raideur radiale de l'articulation 4 = raideur radiale de l'articulation 3 + 45%, c'est-à-dire k4 = 1.45 k3 ; d = 400 mm et Lg = 650 mm. Cette configuration correspond à un barycentre Ω situé à environ 137 mm du centre de la traverse, du côté du bras relié au tube extérieur.

Un autre exemple avantageux correspond à L = 826 mm ; k4 = 2,4 k3 ; d = 470 mm et Lg = 448 mm. Cette configuration correspond à un barycentre Ω situé à environ 131 mm du centre de la traverse, du côté du bras relié au tube extérieur.

L'intervalle 0.3L à 0.6L constitue une fourchette dans laquelle on choisit la distance d pour optimiser la rigidité globale en fonction des caractéristiques des tubes, alors que le sens commun voudrait qu'on écarte les articulations au maximum pour obtenir la meilleure rigidité de flexion de la traverse.

Le décalage du barycentre Ω des articulations vers le bras Bd, pour la symétrie de rigidité en flexion, peut réduire la longueur du tube extérieur 1 et donc réduire la rigidité de flexion d'ensemble de la traverse. Là encore, on pourra accepter un compromis, selon les exigences du véhicule, entre une plus ou moins forte symétrie de rigidité en flexion et une plus ou moins grande rigidité globale de flexion de la traverse.

Les tubes décrits 1, 2 sont a priori de section ronde, mais ces tubes peuvent avoir une section de forme autre que ronde ; le terme "diamètre" utilisé à propos des tubes doit donc être compris dans un sens très large comme désignant une taille plutôt qu'une forme précise de section.

## Revendications

1. Traverse d'essieu de véhicule comprenant un premier tube (1) dont une extrémité est fixée à un bras de roue (Bd), situé d'un côté du véhicule, et dont l'autre extrémité est dirigée vers un autre bras de roue (Bg) situé de l'autre côté du véhicule, et un deuxième tube (2) engagé pour partie à l'intérieur du premier tube et fixé à son extrémité extérieure à l'autre bras de roue (Bg), le tube intérieur (2) et le tube extérieur (1) étant reliés entre eux par au moins deux articulations antiroulis (3,4) en matière élastomère, espacées suivant la direction longitudinale des tubes et logées entre la surface externe du tube intérieur et la surface interne du tube extérieur, chaque articulation antiroulis ayant une raideur radiale propre, **caractérisée par le fait que** les articulations antiroulis (3,4), affectées chacune d'un coefficient proportionnel à leur raideur radiale (k3,k4), admettent un barycentre (Ω) qui est plus proche du bras de roue (Bd) relié au tube extérieur (1) de la traverse que de l'autre bras de roue (Bg).

2. Traverse d'essieu selon la revendication 1, **caractérisée par le fait que** la raideur radiale (k4) de l'articulation (4) la plus proche du bras (Bd) relié au tube extérieur (1) est supérieure à celle (k3) de l'articulation (3) située de l'autre côté.

3. Traverse d'essieu selon la revendication 1, **caractérisée par le fait que** la raideur radiale (k4) de l'articulation antiroulis (4) la plus proche du bras de roue (Bd) relié au tube extérieur (1) est supérieure d'au moins 20 % à la raideur radiale (k3) de l'autre articulation (3).

4. Traverse d'essieu selon la revendication 1, **caractérisée par le fait que** la raideur radiale (k4) de l'articulation antiroulis (4) la plus proche du bras de roue (Bd) relié au tube extérieur (1) est supérieure d'au moins 35 % à la raideur radiale (k3) de l'autre articulation (3).

5. Traverse d'essieu selon l'une des revendications précédentes, **caractérisée par le fait que** le centre géométrique (E) des articulations antiroulis (3,4) est décalé du côté du bras (Bd) relié au tube extérieur (1).

6. Traverse d'essieu selon la revendication 5, **caractérisée par le fait que** la distance (Ld) du centre géométrique (E) des articulations antiroulis au bras (Bd) relié au tube extérieur (1) est inférieure à 0.45 L, L désignant la longueur de la traverse (T).

7. Traverse d'essieu selon l'une des revendications précédentes, **caractérisée par le fait que** la distance (d) entre les articulations est comprise entre 0.3 L et 0.6 L, L désignant la longueur de la traverse (T).

8. Essieu de véhicule muni d'une traverse d'essieu selon l'une des revendications précédentes.

## Patentansprüche

1. Querträger für Fahrzeugachse mit einem ersten Rohr (1), dessen eines Ende an einem Radarm (Bd) befestigt ist, der auf einer Seite des Fahrzeugs angeordnet ist, und dessen anderes Ende zu einem anderen Radarm (Bg) auf der anderen Seite des Fahrzeugs zeigt, und mit einem zweiten Rohr (2), das zum Teil in das erste Rohr eingefügt und an seinem äußeren Ende am anderen Radarm (Bg) befestigt ist, wobei das innere Rohr (2) und das äußere Rohr ( 1 ) untereinander durch mindestens zwei Antirollgelenke (3,4) aus Elastomer verbunden sind, die in Längsrichtung der Rohre voneinander beabstandet und zwischen der Außenfläche des inneren Rohrs und der Innenfläche des äußeren Rohrs angeordnet sind, wobei jedes Antirollgelenk eine eigene radiale Steifigkeit aufweist, **dadurch gekennzeichnet, dass** die Antirollgelenke (3, 4), denen jeweils ein zu ihrer radialen Steifigkeit (k3, k4) proportionaler Koeffizient zugeordnet ist, einen Schwerpunkt (Ω) ermöglichen, der näher am Radarm (Bd) liegt, der mit dem äußeren Rohr (1) des Querträgers verbunden ist, als am anderen Radarm (Bg).

2. Querträger für Achse nach Anspruch 1, **dadurch gekennzeichnet, dass** die radiale Steifigkeit (k4) des Gelenks (4), das sich am nächsten am mit dem äußeren Rohr (1) verbundenen Arm (Bd) befindet, größer ist als die radiale Steifigkeit (k3) des Gelenks (3), das auf der anderen Seite angeordnet ist.

3. Querträger für Achse nach Anspruch 1, **dadurch gekennzeichnet, dass** die radiale Steifigkeit (k4) des Antirollgelenks (4), das sich am nächsten am mit dem äußeren Rohr (1) verbundenen Radarm (Bd) befindet, um mindestens 20 Prozent größer ist als die radiale Steifigkeit (k3) des anderen Gelenks (3).

4. Querträger für Achse nach Anspruch 1, **dadurch gekennzeichnet, dass** die radiale Steifigkeit (k4) des Antirollgelenks (4), das sich am nächsten am mit dem äußeren Rohr (1) verbundenen Radarm (Bd) befindet, um mindestens 35 Prozent größer ist als die radiale Steifigkeit (k3) des anderen Gelenks (3).

5. Querträger für Achse nach einem der vorhergehenden Ansprüche, **dadurch gekennzeichnet, dass** das geometrische Zentrum (E) der Antirollgelenke (3, 4) auf der Seite des mit dem äußeren Rohr (1) verbundenen Arms (Bd) versetzt ist.

6. Querträger für Achse nach Anspruch 5, **dadurch gekennzeichnet, dass** der Abstand (Ld) zwischen dem geometrischen Zentrum (E) der Antirollgelenke und dem mit dem äußeren Rohr (1) verbundenen Arm (Bd) kleiner ist als 0,45 L, wobei L die Länge des Querträgers (T) bezeichnet.

7. Querträger für Achse nach einem der vorhergehenden Ansprüche, **dadurch gekennzeichnet, dass** der Abstand (d) zwischen den Gelenken von 0,3 L bis 0,6 L beträgt, wobei L die Länge des Querträgers (T) bezeichnet.

8. Fahrzeugachse mit einem Achsen-Querträger nach einem der vorhergehenden Ansprüche.

## Claims

1. A vehicle axle crosspiece comprising a first tube (1), one end of which is fixed to a wheel arm (Bd) situated on one side of the vehicle, and the other end of which is directed toward another wheel arm (Bg) situated on the other side of the vehicle, and a second tube (2) engaged partially inside the first tube and fixed at its outer end to the other wheel arm (Bg), the inner tube (2) and the outer tube (1) being joined together by at least two antiroll articulations (3, 4) made of elastomeric material, spaced apart in the longitudinal direction of the tubes and housed between the outside surface of the inner tube and the inside surface of the outer tube, each antiroll articulation having its own radial stiffness, **characterized in that** the antiroll articulations (3, 4), each assigned a coefficient proportional to their radial stiffness (k3, k4), have a center of inertia (Ω) which is closer to the wheel arm (Bd) connected to the outer tube (1) of the crosspiece than to the other wheel arm (Bg).

2. The axle crosspiece as claimed in claim 1, **characterized in that** the radial stiffness (k4) of the articulation (4) closest to the arm (Bd) connected to the outer tube (1) is greater than that (k3) of the articulation (3) situated on the other side.

3. The axle crosspiece as claimed in claim 1, **characterized in that** the radial stiffness (k4) of the antiroll articulation (4) closest to the wheel arm (Bd) connected to the outer tube (1) is at least 20% greater than the radial stiffness (k3) of the other articulation (3).

4. The axle crosspiece as claimed in claim 1, **characterized in that** the radial stiffness (k4) of the antiroll articulation (4) closest to the wheel arm (Bd) connected to the outer tube (1) is at least 35% greater than the radial stiffness (k3) of the other articulation (3).

5. The axle crosspiece as claimed in one of the preceding claims, **characterized in that** the geometric center (E) of the antiroll articulations (3, 4) is offset to the side of the arm (Bd) connected to the outer tube (1) .

6. The axle crosspiece as claimed in claim 5, **characterized in that** the distance (Ld) from the geometric center (E) of the antiroll articulations to the arm (Bd) connected to the outer tube (1) is less than 0.45 L, L denoting the length of the crosspiece (T) .

7. The axle crosspiece as claimed in one of the preceding claims, **characterized in that** the distance (d) between the articulations is between 0.3 L and 0.6 L, L denoting the length of the crosspiece (T).

8. A vehicle axle equipped with an axle crosspiece as claimed in one of the preceding claims.
